# EUROPÄISCHE PATENTSCHRIFT

(11) **EP 1 648 104 B1**
(45) Veröffentlichungstag und Bekanntmachung des Hinweises auf die Patenterteilung: **15.04.2009**
(21) Anmeldenummer: 05022099.5
(22) Anmeldetag: 11.10.2005
(51) Int. Cl.: H04J 3/06, G05B 19/00, H04L 12/40, H04L 7/04, H04L 1/00

(54) **Kommunikationssystem und Verfahren zur Synchronisation desselben**
Communication system and method of synchronisation of this system
Système de communication et procédé de synchronisation dudit système

(30) Priorität: 15.10.2004 DE 102004050423
(43) Veröffentlichungstag der Anmeldung: 19.04.2006
(73) Patentinhaber: Bosch Rexroth AG, 70184 Stuttgart (DE)
(72) Erfinder: Kynast, Rigobert, 97816 Lohr am Main (DE); Leurs, Ludwig, Dr., 97816 Lohr am Rhein (DE); Schmid, Thomas, 97840 Hafenlohr (DE); Schultze, Stephan, Dr., 97816 Lohr am Rhein (DE)

(56) Entgegenhaltungen:
- EP-A- 0 903 655
- EP-A- 1 193 855
- DE-A1- 19 815 647
- US-A1- 2004 090 994
- US-B1- 6 804 257
- SIKORA A: "ECHTZEIT UEBERS ETHERNET SYNCHRONISATION MIT DEM IEEE-1588-STANDARD" ELEKTRONIK, WEKA FACHZEITSCHRIFTENVERLAG, POING, DE, Bd. 52, Nr. 9, 29. April 2003 (2003-04-29), Seiten 46-48,50, XP001160058 ISSN: 0013-5658
- KIEL E ET AL: "EINCHIP-CONTROLLER FUER DAS SERCOS-INTERFACE. ÖINTEGRIERTE ECHTZEIT-KOMMUNIKATION FUER DIE MSR-TECHNIK" ELEKTRONIK, WEKA FACHZEITSCHRIFTENVERLAG, POING, DE, Bd. 41, Nr. 6, 17. März 1992 (1992-03-17), Seiten 50,55-59, XP000287921 ISSN: 0013-5658
- RAMABADRAN T V ET AL: "A TUTORIAL ON CRC COMPUTATIONS" IEEE MICRO, IEEE SERVICE CENTER, LOS ALAMITOS, CA, US, Bd. 8, Nr. 4, August 1988 (1988-08), Seiten 62-74, XP000719941 ISSN: 0272-1732
- PATENT ABSTRACTS OF JAPAN Bd. 013, Nr. 002 (E-700), 6. Januar 1989 (1989-01-06) & JP 63 214034 A (FUJITSU LTD), 6. September 1988 (1988-09-06)

## Beschreibung

Die vorliegende Erfindung betrifft ein Verfahren zur Synchronisation in einem Kommunikationssystem, welches einen Zentralteilnehmer und wenigstens einen weiteren Teilnehmer aufweist, wobei wenigstens einer der weiteren Teilnehmer auf den Zentralteilnehmer synchronisiert wird, und wobei hierfür ein Telegramm mit Synchronisationsinformation vom Zentralteilnehmer zu dem wenigstens einen weiteren Teilnehmer übertragen wird. Ferner betrifft die vorliegende Erfindung ein Kommunikationssystem sowie ein entsprechendes Automatisierungssystem. Schließlich betrifft die vorliegende Erfindung ein Telegramm bzw. eine Telegrammstruktur oder -aufbau.

Im Hinblick auf die Offenbarung der vorliegenden Anmeldung wird auf die von der Anmelderin mit der vorliegenden Patentanmeldung gleichzeitig eingereichten weiteren deutschen Patentanmeldungen mit den Bezeichnungen "Verfahren zur Synchronisation in einem redundanten Kommunikationssystem" und "Verfahren zur Übertragung von Daten in einem Kommunikationssystem" hingewiesen, deren gesamte Offenbarung durch diese Bezugnahme mit in die vorliegende Anmeldung aufgenommen wird.

Im Stand der Technik sind Kommunikationssysteme bekannt. Insbesondere verteilte Kommunikationssysteme sind in vielen technischen Anwendungen anzutreffen. So werden verteilte Kommunikationssysteme beispielsweise in Automatisierungssystemen mit dezentraler Steuerungs- und Antriebstechnik eingesetzt, in denen oftmals eine Vielzahl von Einzelsystemen zeitlich synchron gesteuert und angetrieben werden. Ein solches Einzelsystem kann eine Antriebseinheit, beispielsweise einen Synchron- und .Asynchronmotor, sein, mit welcher-eine von mehreren, zueinander interpolierenden oder eng miteinander gekoppelt arbeitenden Achsen angetrieben wird. Typische Anwendungsgebiete solcher Automatisierungssysteme mit dezentraler Steuerungs- und Antriebstechnik sind Dnick- oder auch Werkzeugmaschinen sowie auch Robotersysteme mit einer Vielzahl von zeitlich zueinander abgestimmt arbeitenden Förder- und Wirkelementen.

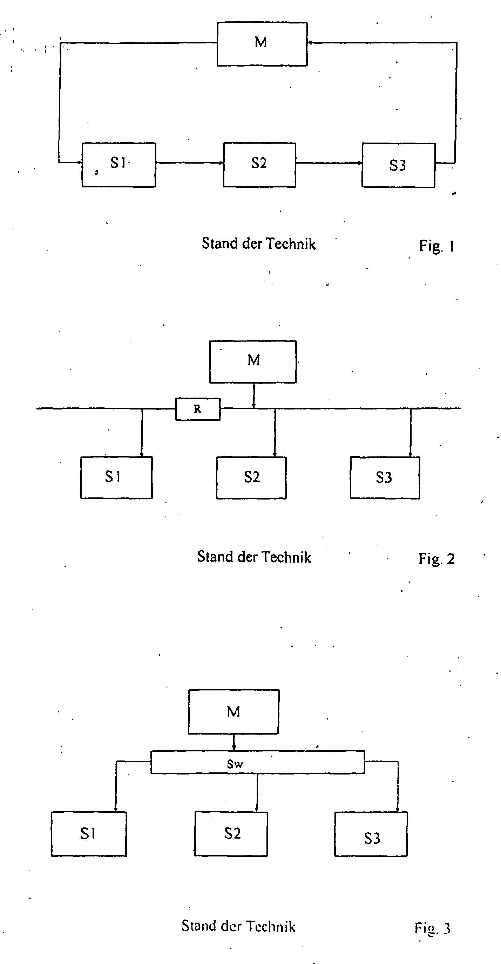

Derartige Kommunikationssysteme umfassen wenigstens zwei, in der Regel jedoch , weitaus mehr Teilnehmer, die vorzugsweise hierarchisch mit einem als Zentralteilnehmer ausgebildeten Teilnehmer und den übrigen Teilnehmern als weiteren Teilnehmern des Kommunikationssystems ausgebildet bzw. angeordnet sind. Eine solche hierarchische Anordnungsstruktur ist beispielsweise als Master-Slave-Struktur mit dem Zentralteil- oder Hauptteilnehmer als "Master" oder "Master-Teilnehmer" (Hauptstation) und den weiteren Teilnehmern als "Slaves" oder "Slave-Teilnehmer" (Unter- oder Nebenstationen) bekannt. Der Zentralteilnehmer ist als zentraler Teilnehmer ausgebildet, der Steuersignale an die weiteren Teilnehmer generiert und versendet. Die weiteren Teilnehmer stehen zum Empfang dieser Steuerungssignale und zur bedarfsweisen weiteren Kommunikation mit dem Zentralteilnehmer sowie üblicherweise auch mit den anderen weiteren Teilnehmern in Kommunikationsverbindung. Die Slave-Teilnehmer beziehen sich dabei zumeist auf Prozessankopplungen, wie z.B. Sensoren und Aktoren, d.h. Ein-/Ausgabebaugruppen für analoge und digitale Signale, sowie Antriebe. Die Dezentralisierung der Signalverarbeitung mit Datenvorverarbeitung bei den Slave-Teilnehmern ist erforderlich, um die Anzahl der übertragenden Daten gering zu halten und erfordert die Kommunikation zwischen dem Master-Teilnehmer und den weiteren Slave-Teilnehmern. Aus dem Stand der Technik sind hierzu im Wesentlichen die in den Fig. 1 bis 3 dargestellten drei Grundanordnungsstrukturen ("Topologien") bekannt. In Fig. 1 sind der Zentralteilnehmer M und die weiteren Teilnehmer S1, S2, S3 in einer Ringstruktur miteinander verbunden. Ein von dem Zentralteilnehmer M generiertes Signal durchläuft die Ringstruktur und passiert somit die einzelnen weiteren Teilnehmer S1, S2 und S3 in serieller Reihenfolge. Fig. 2 zeigt eine Busstruktur mit einer zentralen Busleitung an die sowohl der Zentralteilnehmer M als auch die weiteren Teilnehmer S1, S2 und S3 angeschlossen sind. Der Signal- und Datentransfer wird in bekannter Weise über einen Datenbus bewerkstelligt. Bei längeren Wegstrecken der zentralen Busleitung ist es üblich, zur Verstärkung des Signals einen "Repeater" R in die zentrale Busleitung zwischen zu schalten. Die dritte in Fig. 3 dargestellte Struktur ist eine Sternstruktur mit einem in die Verbindungsleitung integrierten, zentralen Schaltungselement Sw ("Switch"). Ein von dem Zentralteilnehmer M generiertes Signal wird mittels des Schaltungselements Sw dem als Adressaten spezifizierten Teilnehmer S1 oder S2 oder S3 zugestellt.

Die in den Fig. 1 bis 3 dargestellten Strukturen können auch Teil eines komplexeren Systems sein, in welchem mehrere Grundanordnungsstrukturen miteinander verflochten realisiert sind. Die Generierung eines übergeordneten Steuerungssignals obliegt dann einem der Zentralteilnehmer oder auch einem übergeordnetem Zentralteilnehmer.

Ferner sind aus dem Stand der Technik auch verteilte Kommunikationssysteme bekannt, bei denen die Masterfunktion zwischen mehreren Teilnehmern oder sogar zwischen allen Teilnehmern wechseln kann. Solche "Multi-Master"-Systeme bedingen, dass mehrere Teilnehmer die Funktionalität eines zentralen Teilnehmers aufweisen und bei Vorliegen einer definierten Bedingung diese Funktion auch ausüben. Hierbei wird ein zuvor als weiterer Teilnehmer fungierender Teilnehmer Zentralteilnehmer und der bisherige Zentralteilnehmer wird weiterer Teilnehmer des Kommunikationssystems. Eine mögliche Bedingung für einen solchen Wechsel kann beispielsweise das Ausbleiben eines Kontrollsignals des bisherigen Zentralteilnehmers sein.

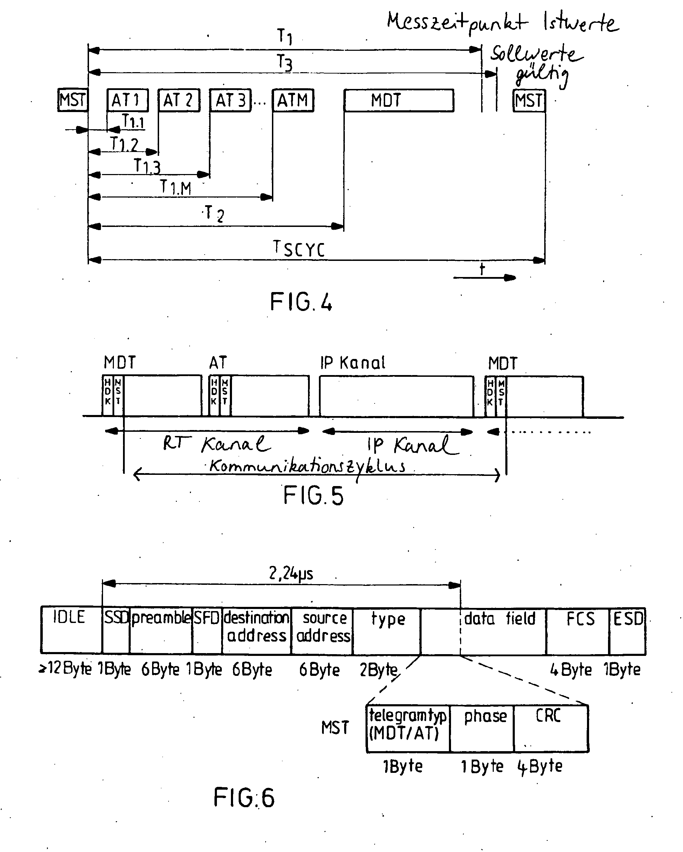

Aktuell ist von der Anmelderin unter der Bezeichnung SERCOS interface® (SErial Real Time COmmunication System) ein derartiges verteiltes Kommunikationssystem mit ringförmiger Struktur auf dem Markt, welches über einen Zentralteilnehmer Steuerungssignale an weitere Teilnehmer generiert und sendet. Die weiteren Teilnehmer sind üblicherweise mittels Lichtwellenleiter mit dem Zentralteilnehmer verbunden. Das SERCOS interface® spezifiziert eine streng hierarchische Kommunikation. Daten werden in Form von Datenblöcken, den sogenannten Telegrammen oder "Frames" in zeitlich konstanten Zyklen zwischen der Steuerung (Master) und den Unterstationen (Slave) ausgetauscht. Unmittelbare Kommunikation zwischen den weiteren Teilnehmern bzw. Unterstationen findet nicht statt. Zusätzlich werden Dateninhalte festgelegt, d.h. Bedeutung, Darstellung und Funktionalität der übertragenen Daten ist in großem Maße vordefiniert. Bei dem SERCOS interface® ist der Master die Anschaltung der Steuerung an den Ring und ein Slave die Anschaltung einer oder mehrerer Unterstationen (Antriebe oder I/O-Stationen). Mehrere Ringe an einer Steuerung sind möglich, wobei die Koordination der einzelnen Ringe zueinander Aufgabe der Steuerung ist und nicht vom SERCOS interface® spezifiziert wird. Bevorzugt wird dieses Kommunikationssystem zur Regelung und Steuerung von verteilt angeordneten Motoren, beispielsweise von Synchron- oder Asynchronmotoren, eingesetzt. Die weiteren Teilnehmer des Kommunikationssystems sind dann die Regelgeräte zur Regelung und Steuerung jeweils eines Motors. Haupteinsatzgebiete dieses Kommunikationssystems sind insbesondere die Antriebe von Werkzeugmaschinen, Druckmaschinen, Wirkmaschinen und Maschinen der allgemeinen Automatisierungstechnik. Bei dem SERCOS interface® gibt es fünf verschiedene Kommunikationsphasen. Die ersten vier Phasen (Phase 0 bis Phase 3) dienen der Initialisierung der Teilnehmer, die fünfte Phase (Phase 4) ist der reguläre Betrieb.
Innerhalb eines Kommunikationszyklus tauscht jede Unterstation Daten mit der Steuerung aus. Der Zugriff auf den Ring ist deterministisch innerhalb kollisionsfreier Sendezeitschlitze. In Fig. 4 ist der Kommunikationszyklus des regulären Betriebs, d.h. die Kommunikationsphasen 3 und 4 des SERCOS interface®, schematisch dargestellt. Bei dem SERCOS interface® gibt es drei verschiedene Telegrammarten, nämlich Master-Synchronisationstelegramme, Antriebstelegramme und Master-Datentelegramme. Master-Synchronisationstelegramme (MST) werden vom Master-Teilnehmer ausgesandt und besitzen nur ein kurzes Datenfeld und dienen zur Vorgabe der Kommunikationsphase und als Zeitreferenz. Antriebstelegramme (AT) werden von Slave-Teilnehmern gesendet und weisen beispielsweise Ist-Werte eines durch den jeweiligen Slave-Teilnehmer angesteuerten Antriebs auf. Master-Datentelegramme (MDT) sind Summen(rahmen)telegramme mit Datenfeldern für alle Slave-Teilnehmer. Mittels Master-Datentelegramme werden vom Master an den jeweiligen Slave Soll-Werte übermittelt. Jede Unterstation bekommt während der Initialisierung den Beginn und der Länge ihres (Unter-)Datenfeldes mitgeteilt. Das SERCOS interface® definiert dabei folgende Arten von Daten, nämlich Betriebsdaten, Steuer- bzw. Statusinformationen und nicht zyklisch übertragene Daten. Die Betriebsdaten (Prozessdaten) werden in jedem Zyklus übertragen. Beispiele sind hierfür Soll- und Istwerte. Die Länge des Betriebsdatenbereichs ist parametrisierbar, sie wird bei der Initialisierung festgelegt und bleibt während des Betriebs des Ringes konstant. Die Steuerinformation, welche von den Master-Teilnehmern zu den Slave-Teilnehmern gesendet wird, und die Statusinformation, welche von den Slave-Teilnehmern zu den Master-Teilnehmern gesendet wird, sind beispielsweise, Freigabesignale und Bereitschaftsmeldungen. Nicht zyklisch übertragene Daten (Service-Kanal) umfassen Einstellparameter, Diagnosedaten und Warnungen. Außerdem werden Kommandosequenzen über diese nicht zyklische Übertragung gesteuert. Der schematischen Darstellung der Fig. 4 entnimmt man, dass ein Kommunikationszyklus vom Zentralteilnehmer durch Aussendung eines MST gestartet wird. Alle kommunikationsspezifischen Zeiten werden auf das Ende dieses kurzen (ca. 25 µs langen) Telegramms bezogen. Die Unterstationen senden nun nacheinander jeweils in ihren Sendezeitschlitzen, beginnend ab T_{l,i} ihre Antriebstelegramme (ATi). Nach dem letzten AT sendet der Master ab T₂ das MDT. Der nächste Zyklus beginnt wieder mit einem MST. Der Zeitabstand zwischen zwei MSTs wird SERCOS-Zykluszeit T_{SYNC} genannt. Die Kommunikation wird bei dem SERCOS interface® auf das Ende des MST synchronisiert. Dabei wird in vorzugsweise äquidistanten Zeitschritten von dem Zentralteilnehmer ein Synchronisationstelegramm oder Synchronisationstelegramm generiert und in den Kommunikationsring eingespeist. An den Empfang des Synchronisationstelegramms und des Synchronisationssignals ist in den Regelgeräten üblicherweise über einen Zeitparameter eine Soll-/Istwertverarbeitung angekoppelt, die zu einer Bestimmung und Aufgabe von Steuer- und Regelparametern an die jeweiligen Stellmotoren führt.

Die Synchronisierung der Teilnehmer ist dabei von hervorragender Bedeutung. Falls es zu Ungenauigkeiten in der Synchronisierung der weiteren Teilnehmer auf den Zentralteilnehmer kommt, werden die von den weiteren Teilnehmern gesteuerten Vorgänge nicht synchronisiert ausgeführt. So kann beispielsweise das von einer Druckmaschine erzeugte Druckbild, deren Stellmotoren eines mittels eines solchen herkömmlichen Kommunikationssystems gesteuert werden, aufgrund der nicht hinreichend synchronen Bewegungsabläufe verschwommen sein. Entsprechendes gilt für Werkzeugmaschinen oder auch für andere Automatisierungsmaschinen, die eine hochgenaue Synchronisation der Vorgänge erfordern. Beispielsweise bei Werkzeugmaschinen kann eine fehlerhafte Synchronisierung zu einer ungenauen Maschinenbearbeitung eines Werkstücks führen, da sich beispielsweise einzelne Achsen (z.B. x-, y- und z-Achsen) zeitlich unsynchronisiert bewegen.

Die bekannte Synchronisierung mittels eigenem Master-Synchronisierungstelegramm MST in jedem Kommunikationszyklus besitzt Nachteile im Hinblick auf die Protokolleffizienz. Dies beruht darauf, dass der Zentralteilnehmer zwei unterschiedliche Arten von Telegrammen, nämlich das Master-Synchronisierungstelegramm und das Master-Datentelegranvn, generieren und übertragen muss. Entsprechendes gilt für den Empfang durch die weiteren Teilnehmer (Slaves) des Kommunikationssystems. Insbesondere durch die unterschiedlichen Typen von vom Zentralteilnehmer während des Kommunikationszyklus ausgesandten Telegrammen, welche sich auch in der Länge erheblich unterscheiden, ist die hard- und softwaremäßige Implementierung des Kommunikationssystems aufwendig. Ferner kostet das in jedem Kommunikationszyklus separat bzw. gesondert übertragene Master-Synchronisationstelegramm MST Zeit, welche für die Übertragung von Betriebsdaten verloren geht und somit zu einem Verlust an Bandbreite führt.

Die EP 1 193 855 A2 offenbart ein Kommunikationssystem mit einem Zentralteilnehmer und weiteren Teilnehmern, die auf den Zentralteilnehmer synchronisiert werden, wobei für die Synchronisation ein Datentelegramm, das auch Synchronisationsinformationen enthält, verwendet werden kann. Die DE 198 15 647 A1 offenbart ein Verfahren, bei dem Zeittelegramme von einer zentralen Zeitbasis an lokale Zeitbasen übertragen werden, um eine gemeinsame Zeitbasis zu generieren. Auch hierzu können Datentelegramme mit Synchronisationsinformationen verwendet werden. Bei den hier vorgeschlagenen Lösungen besteht das Problem, daß die Synchronisationsinformationen erst zur Verfügung stehen, wenn das gesamte Datenpaket empfangen und ausgewertet worden ist.

Der Erfindung liegt daher die Aufgabe zugrunde, die Nachteile des Standes der Technik zu vermeiden, und insbesondere eine besonders effiziente Synchronisation des wenigstens einen Teilnehmers auf den Zentralteilnehmer zu realisieren.

Diese Aufgabe wird gelöst durch ein Verfahren, ein Kommunikationssystem, ein Automatisierungssystem sowie ein Datentelegramm mit den Merkmalen der unabhängigen Patentansprüche.

Gemäß der vorliegenden Erfindung wird daher im Unterschied zum Stand der Technik die Synchronisationsinformation nicht in Form eines eigenen kurzen Master-Synchronisationstelegramms übertragen, sondern die Synchronisationsinformation ist Bestandteil eines Datentelegramms, d.h. eines Telegramms, welches Betriebs- oder Prozessdaten vom Zentralteilnehmer zu dem wenigstens einen weiteren Teilnehmer (oder umgekehrt) überträgt. Die Kommunkation wird dabei auf das Ende der in dem Datentelegramm enthaltenen Synchronisationsinformation festgelegt.

Vorzugsweise ist das Datentelegramm ein Master-Datentelegramm und weist Sollwerte für von dem wenigstens einen weiteren Teilnehmer angesteuerte Prozessankopplungen, wie beispielsweise Antriebe bzw. An-/Ausgabebaugruppen (I/O-Stationen) auf. Das Master-Datentelegramm ist dabei ein Telegramm, das der Zentralteilnehmer an die weiteren Teilnehmer des Kommunikationssystems sendet. Aufgrund der in der Regel sehr großen Anzahl der weiteren Teilnehmer und dementsprechend der großen Menge der an diese zu übertragenden Steuerinformationen wird der Hauptteil des Master-Datentelegramms durch eben diese Daten gebildet und die zusätzlich eingebettete Synchronisationsinformation macht in der Regel nur einen kleinen Anteil des Dateninhalts aus.

Vorteilhafterweise ist die Synchronisationsinformation in das Datenfeld des Datentelegramms eingebettet. Das Master-Datentelegramm weist dabei vorzugsweise folgende Felder auf: ein Präambelfeld, ein Zieladressenfeld, ein Quelladressenfeld, ein Typenfeld, ein Datenfeld und ein Prüfsummenfeld, wobei das Prüfsummenfeld des Datentelegramms eine Prüfsumme über das gesamte Datentelegramm aufweist. Insbesondere weist das Master-Datentelegramm die vorgenannten Felder vorzugsweise in der vorgenannten Reihenfolge aus. Darüber hinaus können aber auch weitere Felder insbesondere am Anfang und Ende des von dem Zentralteilnehmer übertragenen Datenstroms vorgesehen sein. Die Einbettung der Synchronisationsinformation in das Datenfeld erfolgt dabei vorzugsweise derart, dass bei einem als Summentelegramm ausgebildeten Master-Datentelegramm die Synchronisationsinformation in einem oder mehreren zusammen-hängenden oder auch voneinander getrennten Teilbereichen eingebettet ist, und eindeutig bzw. vorgegeben von den Telegrammpositionen getrennt ist, welche für die Datenübertragung zu den weiteren Teilnehmern vorgesehen ist.

Im Hinblick auf eine effiziente Implementierung des erfindungsgemäßen Verfahrens ist bevorzugt, dass die Synchronisationsinformation ein Teilfeld des Datenfeldes des Master-Datentelegramms bildet. Auf diese Weise wird die gesamte Synchronisationsinformation in einem zusammenhängenden Teilfeld zusammengefasst. Vorzugsweise ist dabei das Teilfeld mit der Synchronisationsinformation der erste Eintrag des Datenfeldes des Master-Datentelegramms. Grundsätzlich ist bevorzugt, dass sich die Synchronisationsinformation möglichst am Anfang des Master-Datentelegramms befindet, da der Telegrammanfang schneller empfangen wird, und somit für eine weitere Bearbeitung zur Verfügung steht. Da insbesondere auch das Datenfeld des Master-Datentelegramms für die Einbettung der Synchronisationsinformation bevorzugt ist, ergibt sich insgesamt eine bevorzugte Positionierung der Synchronisationsinformation, wenn diese den ersten bzw. vordersten Eintrag des Datenfeldes, insbesondere direkt nach dem Typenfeld des Master-Datentelegramms, bildet.

Ferner ist bevorzugt, dass das Ende des Teilfeldes mit der Synchronisationsinformation einen vorgegebenen zeitlichen Abstand zum Anfang des Datentelegramms besitzt. Der vorgegebene zeitliche Abstand ist dabei bekannt und konstant und insbesondere auch unabhängig von der Gesamtlänge des Telegramms. Da der Telegrammanfang einen festen Bezug zum Synchronisationszeitpunkt im Zentralteilnehmer besitzt, ist der Zeitabstand zwischen dem Synchronisationszeitpunkt im Zentralteilnehmer und dem Ende der in das Master-Datentelegramm eingebetteten Synchronisationsinformation bekannt. Der Synchronisationsabstand zum Mastertakt ist daher bekannt und es ergibt sich ein konstanter Triggerzeitpunkt unabhängig von der Telegrammlänge. Auf diese Weise kann eine stabile Synchronisation mit bekanntem Zeitabstand erreicht werden.

Vorzugsweise liegt der vorgegebene zeitliche Abstand im Bereich von einigen Mikrosekunden und besonders bevorzugt ist, dass der vorgegebene zeitliche Abstand ungefähr im Bereich von etwa zwei Mikrosekunden liegt und insbesondere 2,24 Mikrosekunden ist. Eine derartige Wahl des zeitlichen Abstands ist insoweit bevorzugt, da hierdurch für die sich aus der Praxis ergebenden Anforderungen an die Länge der Synchronisationsinformation diese vollständig übertragen werden kann. Ferner ist diese zeitliche Dimensionierung auch deshalb bevorzugt, da dadurch die Synchronisationsinformation hinreichend frühzeitig innerhalb des Kommunikationszyklus bei den weiteren Teilnehmern vorliegt, so dass eine Auswertung der Synchronisationsinformation sowie eine weitere Bearbeitung der ferner im Master-Datentelegramm enthaltenen Betriebsinformation effizient durchgeführt werden kann.

Erfindungsgemäß ist die im Datentelegramm enthaltende Synchronisationsinformation mit einer eigenen Prüfsumme abgesichert. Hierdurch ergibt sich einerseits zwar eine Redundanz insoweit, als das Master-Datentelegramm als Ganzes mit einer Prüfsumme abgesichert ist und die Synchronisationsinformation sozusagen über eine eigene, zusätzliche Prüfsumme verfügt, wobei der besondere Vorteil dieser Ausführungsform darin liegt, dass zum Empfangen der Synchronisationsinformation nicht der Empfang des gesamten unter Umständen wesentlich längeren Master-Datentelegramms abgewartet werden muss und die Daten auf Verfälschung überprüft werden müssen, bevor die Synchronisationsinformation für die Unterstationen zur Verfügung steht. Die für die Synchronisationsinformation eigene Prüfsumme ist insoweit auch vorteilhaft, da die Synchronisationsinformation im Vergleich zum gesamten Master-Datentelegramm wesentlich unwahrscheinlicher von einem Bitfehler betroffen ist. Diese geringere Wahrscheinlichkeit beruht darauf, dass die Wahrscheinlichkeit eines zerstörten Telegramms bzw. Teiltelegramms bei gleichverteilten Bitfehlern ungefähr proportional zur Länge des Telegramms bzw. Teiltelegramms ist. Selbst wenn also das Master-Datentelegramm als Ganzes nicht brauchbar ist, wie durch entsprechende Überprüfung mit der am Ende des Master-Datentelegramms angeordneten Prüfsumme FCS herausgefunden wurde, kann dennoch eine ordnungsgemäße Synchronisation erfolgen, da der vorderste Teil des Master-Datentelegramms, welcher die Synchronisationsinformation erhält, in diesem Fall durchaus unversehen übertragen werden konnte, wie unter Umständen an der der Synchronisationsinformation eigenen Prüfsumme festgestellt werden kann. Dabei kann die Prüfsumme grundsätzlich lediglich über die Synchronisationsinformation gebildet werden. Bevorzugt ist aber eine Ausführungsform der vorliegenden Erfindung, bei welcher die Prüfsumme über den Anfang des Datentelegramms bis einschließlich der Synchronisationsinformation gebildet ist. Insoweit sind daher auch die gemäß dem Kommunikationsprotokoll erforderlichen Anfangsfelder des Master-Datentelegramms, wie beispielsweise das Präambelfeld, das Zieladressenfeld, das Quelladressenfeld und das Typenfeld mit abgesichert. Die Prüfsumme stellt dabei vorzugsweise eine zyklische Redundanzprüfung dar, welche am Ende des Teilfeldes mit der Synchronisationsinformation angeordnet ist. Bei dieser Ausführungsform wird daher in dem Master-Datentelegramm eine selbstständiges Synchronisationstelegramm eingebettet, wobei die "Header" dieser beiden Telegramme übereinstimmen und beide Telegramme jeweils durch eine eigene Prüfsumme unabhängig voneinander gesichert sind, und wobei mit dem Empfang der Prüfsumme die Verarbeitung des jeweiligen Telegramms beginnen kann.

Bevorzugterweise erfolgt die Auswertung der Prüfsumme bei dem wenigstens einen weiteren Teilnehmer durch Vergleich von vorgespeiclierten Prüfsummen für vorbekannte Datentelegrammeinträge. Im Unterschied zu dem insbesondere aufgrund des Datenfeldes variablen Dateninhalts und auch der variablen Datenmenge des Master-Datentelegramms insgesamt, ergibt sich bei der Absicherung der Synchronisationsinformation eine wesentlich einfachere Überprüfung der Integrität der übertragenen Daten, da die Anzahl der möglichen Daten begrenzt und die Datenmenge konstant ist. Die Prüfsummen können daher bereits im Vorhinein bestimmt werden und die zyklische Redundanzprüfung zur Bestimmung der Korrektheit der Synchronisationsinformation kann durch einen einfachen Vergleich erfolgen, wodurch sich der Rechenaufwand verringert.

In einer besonders effizienten Ausführungsform der vorliegenden Erfindung weist das Teilfeld mit der Synchronisationsinformation, vorzugsweise in dieser Reihenfolge, folgende Felder auf: ein Typenfeld, ein Phasenfeld und ein Prüfsummenfeld, wobei das Prüfsummenfeld des Teilfeldes eine Prüfsumme über den Anfang des Datentelegramms bis einschließlich dem Phasenfeld aufweist. In dem Typenfeld wird vorzugsweise spezi-fiziert, um welchen Telegrammtyp es sich handelt. Obwohl aufgrund der Tatsache, dass sich die weiteren Teilnehmer auf den Zentralteilnehmer synchronisieren müssen und hierzu lediglich erforderlich ist, dass Synchronisationsinformation vom Zentralteilnehmer an die weiteren Teilnehmer gesandt wird, ist von der Erfindung ebenfalls umfasst, dass die Antriebstelegramme einen entsprechenden Aufbau besitzen, so dass in dem Kommunikationssystem dann beide Telegrammarten, nämlich Master-Datentelegramme und Antriebstelegramme, das gleiche Format bzw. Aufbau besitzen. Insbesondere ist hierzu bevorzugt, dass die Antriebstelegramme nicht einzeln, wie beim Stand der Technik von jeder Nebenstation ausgesandt werden (vgl. Fig. 4), sondern ebenfalls wie das Master-Datentelegramm als Summentelegramm ausgebildet sind. Es gibt daher vorzugsweise nur ein Antriebstelegramm, in welches die einzelnen Unterstationen in jeweils einem hierzu vordefinierten Feld beispielsweise Istwerte von Antrieben eintragen. Damit nun die Antriebstelegramme dieselbe Struktur wie das Master-Datentelegramm besitzen, ist für diese ein entsprechender Aufbau mit einem gesonderten Teilfeld am Anfang des Datenfeldes bevorzugt. Das am Anfang des Teilfeldes vorgesehene Typenfeld spezifiziert daher bei dieser Ausführungsform, ob es sich bei dem vorliegenden Telegramm um ein Master-Datentelegramm oder ein Antriebstelegramm handelt.

Weitere bevorzugte Ausführungsfonnen der Erfindung sind in den abhängigen Patentansprüchen offenbart.

Die Erfindung, sowie weitere Merkmale, Ziele, Vorteile und Anwendungsmöglichkeiten derselben, wird bzw. werden nachfolgend anhand einer Beschreibung von bevorzugten Ausführungsbeispielen unter Bezugnahme auf die beigefügten Zeichnungen näher erläutert. In den Zeichnungen bezeichnen dieselben Bezugszeichen dieselben bzw. entsprechende Elemente. Dabei bilden alle beschriebenen, und/oder bildlich dargestellten Merkmale für sich oder in beliebiger sinnvoller Kombination den Gegenstand der vorliegenden Erfindung, und zwar unabhängig von ihrer Zusammenfassung in den Patentansprüchen oder deren Rückbeziehung. In den Zeichnungen zeigen:
- Fig. 1: eine schematische Darstellung eines aus dem Stand der Technik bekannten Kommunikationssystems, das in einer Ringstruktur angeordnet ist;
- Fig. 2: eine schematische Darstellung eines aus dem Stand der Technik bekannten Kommunikationssystems, das in einer Busstruktur angeordnet ist;
- Fig. 3: eine schematische Darstellung eines aus dem Stand der Technik bekannten Kommunikationssystems, das in einer Sternstruktur angeordnet ist;
- Fig. 4: eine schematische Darstellung der zur Synchronisation und zum regulären Betrieb vorgesehenen Phasen des Kommunikationszyklus des aus dem Stand der Technik bekannten SERCOS interface®;
- Fig. 5: eine schematische Darstellung der erfindungsgemäß zur Synchronisation und zum regulären Betrieb vorgesehenen Phase des Kommunikationszyklus des erfindungsgemäßen Kommunikationssystems; und
- Fig. 6: eine schematische Darstellung der Telegrammstruktur mit eingebetteter Synchronisationsinformation des erfindungsgemäßen Kommunikationssystems.

In Fig; 5 ist schematisch die Betriebsphase der Kommunikation des erfindungsgemäßen Kommunikationssystems im Fall einer zyklischen Kommunikation dargestellt. Man entnimmt der Fig. 5, dass Datentelegramme zwischen einem Zentralteilnehmer oder Master-Teilnehmer (oder Hauptstation) und wenigstens einem weiteren Teilnehmer (Slave-Teilnehmer oder Unter- bzw. Nebenstationen) ausgetauscht werden. Dabei ist der Zentralteilnehmer die Station, auf die sich die Nebenstationen synchronisieren sollen. Das von dem Zentralteilnehmer beispielsweise entlang eines Rings (vgl. Fig. 1) ausgesandte Datentelegramm ist als MDT (= "Master-Datentelegramm") bezeichnet. Das Datentelegramm der wenigstens einen Nebenstation wird mit AT (= "AntriebsTelegramm") bezeichnet. In Fig. 5 ist lediglich ein Antriebstelegramm gezeigt, was einem Fall entspricht, in welchem lediglich ein weiterer Teilnehmer vorgesehen ist (vgl. Fig. 4), oder in welchem das Antriebstelegramm als Summentelegramm ausgebildet ist und entsprechende Telegrammbereiche für eine Vielzahl von weiteren Teilnehmern aufweist. Im Master-Datentelegramm MDT sind beispielsweise Sollwerte für von den Nebenstationen anzusteuernde Aktoren.enthalten. Das Antriebstelegramm AT beinhaltet z.B. entsprechende Istwerte zur Rückmeldung an den Zentralteilnehmer. Die Synchronisationsinfomiation wird gemäß dem vorliegenden Ausführungsbeispiel der Erfindung nicht durch ein eigenes Master-Synchronisationstelegramm MST (vgl. Fig. 4) gebildet, sondern die Synchronisationsinformation ist ein Datenfeld MST in dem Master-Datentelegramm MDT. Der genaue Aufbau des Master-Datentelegramms MDT wird weiter unten unter Bezugnahme auf Fig. 6 näher erläutert. Es sei an dieser Stelle bereits bemerkt, dass das Master-Synchronisations-Informationsfeld MST am Anfang bzw. in einem vorderen Abschnitt des Master-Datentelegramms MDT hinter einem Header HDR eingebettet ist. Das Antriebstelegramm AT besitzt zur einfacheren Implementierung des erfindungsgemäßen Kommunikationssystems in Hardware und Software dieselbe Struktur wie das Master-Datentelegramm MDT, wobei aber in der Regel vom Antriebstelegramm keine Synchronisationsinformation an die Hauptstation übertragen wird. Dies ist deshalb vorteilhaft, da dann beide Arten von Telegrammen, nämlich MDT und AT im Hinblick auf die eigentlichen Daten, wie z.B. Soll- und Istwerte, den gleichen Offset besitzen. Der Teil der Kommunikation welcher das Master-Datentelegramm sowie wenigstens ein Antriebstelegramm umfasst, wird in Fig. 5 als RT-Kanal bezeichnet. Optional kann neben diesem RT-Kanal auch ein IP-Kanal im Kommunikationszyklus enthalten sein. Bei dem IP-Kanal handelt es sich dabei um einen Zeitschlitz zur Übertragung von gemäß dem Internetprotokoll kodierten Daten. Die Dauer des Kommunikationszyklus ist in Fig. 5 ebenfalls angezeigt. Entsprechend der Dauer des Kommunikationszyklus beim SERCOS interface® (vgl. Fig. 4), bei welchem diese vom Ende eines Master-Synchronisationstelegramms zum Ende des nächsten darauffolgenden Master-Synchronisationstelegramms definiert wird, ist der Kommunikationszyklus bei dem Kommunikationssystem der vorliegenden Erfindung als der Abstand vom Ende des Master-Synchronisationsinformationsfeldes eines Master-Datentelegramms zu dem Ende des Master-Synchronisationsinformationsfeldes eines darauffolgenden Master-Datentelegramms definiert. Der nächste Kommunikationszyklus beginnt daher mit dem dem Master-Synchronisationsinformationsfeld folgenden Anteil des Master-Datentelegramms, wie durch den punktierten Pfeil, welcher den darauf folgenden RT-Kanal des nächsten Zyklus schematisch andeutet.

In Fig. 6 ist schematisch der Aufbau des Master-Datentelegramms in weiterer Einzelheit dargestellt. Vor Beginn des eigentlichen Master-Datentelegramms ist eine Leerlaufphase ("IDLE") vorgesehen, welche mindestens 12 Byte lang ist. Das Master-Datentelegramm beginnt mit einem 1 Byte großem Datenfeld, welches als SSD ("Start Stream Delimiter") bezeichnet ist. Hierbei handelt es sich um ein Präfix, welches den ' Anfang eines übertragenen Datenstroms begrenzt. Darauf folgt, eine Präambel (auf Englisch: "preamble") der Länge von 6 Byte, wobei eine Funktion der Präambel darin bestehen kann, der Hardware der Elektronik in dem erfindungsgemäßen Kommunikationssystem eine Start-up-Zeit zur Verfügung zu stellen, um zu erkennen, dass ein Telegramm übertragen wird. Daran schließt sich ein Datenfeld SFD ("Start Frame Delimiter") an, welches den Anfang des eigentlichen Telegramms oder Frames abgrenzt. Das SFD-Feld ist ein 1 Byte lang. Darauffolgend sind im Master-Datentelegramm die Zieladresse ("destination address") und die Quelladresse ("source address") für das Telegramm angegeben, wobei jedes der beiden Datenfelder jeweils eine Länge von 6 Byte besitzt. Darauf folgt ein 2 Byte langes Typenfeld, welches dazu verwendet wird, zu identifizieren, welcher Typ von Netzwerkprotokoll in dem darauf folgenden Datenfeld verwendet wird. Darauf folgt das eigentliche Datenfeld, welches in seiner Länge nicht genau spezifiziert ist. Beispielsweise bei Ethernet kann die Länge des Datenfelds bis zu 1.500 Byte betragen. In der Regel wird die Länge des Datenfelds davon abhängen, wie viele und welche Daten in dem Telegramm übertragen werden. Im Anschluss an das Datenfeld ist eine 4 Bit lange Prüfsumme FCS ("Frame Check Sequence") vorgesehen. Das FCS-Feld enthält somit eine Prüfsumme, welches eine Überprüfung der Integrität der Daten in dem gesamten Telegramm gestattet. Den Abschluss der übertragenden Daten bildet das 1 Byte lange Feld ESD ("End Stream Delimiter"), welches ein Suffix und das Ende des übertragenen Datenstroms darstellt.

Das Master-Synchronisationsinformationsfeld bildet einen Teil des Datenfelds des erfindungsgemäßen Telegramms und ist genauer am Anfang des Datenfeldes in dieses eingebettet. Das Master-Synchronisationsinformationsfeld ist in seiner Länge konstant und weist ein Anfangsfeld der Länge von einem Byte auf, in welchem der Telegrammtyp spezifiziert ist. In diesem Feld wird insbesondere spezifiziert, ob es sich bei dem vorliegenden Telegramm um ein Master-Datentelegramm MDT oder ein Antriebstelegramm AT handelt. Wie bereits oben erläutert wurde ist die Synchronisationsinformation grundsätzlich nur für ein Master-Datentelegramm erforderlich, da sich die Nebenstationen auf den Zentralteilnehmer (= Master) synchronisieren sollen. Aus Gründen der einfacheren Implementierung in Hard- und Software ist jedoch bevorzugt, dass die Antriebstelegramme denselben Aufbau wie das Master-Datentelegramm besitzen, so dass auch ein Antriebstelegramm das Master-Synchronisationsinformationsfeld aufweisen kann. Für diesen Fall ist das Feld "Telegrammtyp" daher mit der entsprechenden Information der Nebenstation zu besetzen. Die eigentliche Synchronisationsinformation wird in einem darauf folgenden Feld ("Phase") der Länge von einem Byte übertragen. Den Abschluss des Master-Synchronisationsinformationsfeld bildet ein CRC-Feld (="Cyclic Redundancy Check"), welches mittels zyklischer Redundanzprüfung zur Überprüfung der Integrität der Daten vom Anfang des Datenstroms, d.h. von dem SSD-Feld bis zum Phasenfeld des Master-Synchronisationsinformationsfeld, dient. Die CRC-Prüfsumme ist eine eindeutige Zahl, die erzeugt wird, indem man ein Polynom auf das Bitmuster, welches vom SSD-Feld bis zum Phasenfeld enthalten ist, anwendet. Das gleiche Polynom wird an der Empfangsstation des Datentelegramms verwendet, um eine weitere Prüfsumme zu erzeugen. Die beiden Prüfsummen werden dann verglichen, um festzustellen, ob die übertragenen Daten korrumpiert bzw. verfälscht sind. Aus der Darstellung der Fig. 6 ergibt sich, dass das Ende des CRC-Feldes einen konstanten zeitlichen Abstand von dem Anfang (Anfang des SSD-Feldes) des Master-Datentelegramms besitzt. Dieser konstante zeitliche Abstand beträgt vorzugsweise etwa zwei Mikrosekunden und ist im gezeigten Ausführungsbeispiel 2,24 Mikrosekunden.

Während zuvor in Verbindung mit den Fig. 5 und 6 der Kommunikationszyklus bzw. der Aufbau des Master-Datentelegramms in weiterer Einzelheit erläutert wurde, wird im Folgenden der Betrieb zur Synchronisation der weiteren Teilnehmer bzw. Slaves auf den Zentralteilnehnier bzw. Master näher erläutert. Der Slave empfängt dabei ein Master-Datentelegramm MDT, wobei er diesem Telegramm zum einen die Synchronisationsinformation und zum anderen die ihm zugewiesene Steuerinformation, z.B. in Form von Sollwerten für elektromechanische Wandler (Motoren), entnimmt. Die ihm zugewiesene Steuerinformation erhält der Slave aus dem Master-Datentelegramm MDT dadurch, dass er die an der ihm zugeordneten Stelle des als Summentelegramms ausgebildeten Master-Datentelegramms MDT eingeschriebene Information ausliest. Da das Master-Datentelegramm MDT eine "Über-alles-Prüfsumme" FCS, üblicherweise am Ende des Telegramms, aufweist, wird zunächst nach Empfang des gesamten Master-Datentelegramms MDT die Gültigkeit des gesamten Datentelegramms geprüft. Die dem Slave zugeordnete Steuerinformation ist daher erst nach Empfang des gesamten Master-Datentelegramms und nach dessen Überprüfung auf Unverfälschtheit verfügbar. Insbesondere aufgrund der nicht vordefinierten Länge des Master-Datentelegramms (das Datenfeld "data field" kann einen variablen Inhalt bis zu einer Länge von 1.500 Byte auf weisen) ist der Zeitpunkt, an welchem die Steuerinformation für den Slave verfügbar ist, nicht genau vorhersagbar. Anders verhält es sich mit der in das Master-Datentelegramm erfindungsgemäß eingebetteten Synchronisationsinformation. Diese Synchronisationsinformation wird nicht wie beim Stand der Technik über ein eigenes Master-Synchronisationstelegramm MST den Slaves zur Verfügung gestellt, sondern ist als Teilfeld MST in das Datenfeld des Master-Datentelegramms MDT integriert. Da die eingebettete Synchronisationsinformation derart mit einer eigenen Prüfsumme CRC versehen ist, dass ein Teil des Master-Datentelegramms vom Anfang bis einschließlich der Synchronisationsinformation (Gesamtlänge 28 Byte, siehe Fig. 6) gesichert ist, kann die Synchronisationsinformation unmittelbar nach Erhalt des Master-Datentelegramms bis zu dem Ende des Teilfeldes MST des Datenfeldes des Master-Datentelegramms MDT ausgewertet werden. Es muss daher nicht das gesamte Master-Datentelegramm vollständig empfangen und auf Unverfälschtheit überprüft werden. Da das Ende der Synchronisationsinformation, d.h. das Ende des Teilfeldes MST, einen bekannten konstanten bzw. festen Abstand zum Telegrammanfang besitzt, welcher insbesondere unabhängig von der Gesamtlänge des Master-Datentelegramms MDT ist, ist der Zeitpunkt, an welchem die Synchronisationsinformation an dem Slave-Teilnehmer verfügbar ist, bekannt. Da wiederum der Anfang des Master-Datentelegramms MDT einen festen Bezug zum Synchronisationszeitpunkt im Zentralteilnehmer bzw. Master besitzt, ist der zeitliche Abstand zwischen dem Synchronisationszeitpunkt im Master und dem Ende des Synchronisationsteilfeldes MST, d.h. dem Ende des CRC-Feldes, bekannt, wodurch eine stabile Synchronisation mit bekanntem Zeitabstand erreicht werden kann. Insbesondere kann die Synchronisation, welche eine Voraussetzung für die Ansteuerung der Antriebe bzw. Aktoren darstellt, vor bzw. zumindest teilweise parallel zum Empfang der Sollwerte durchgeführt werden. Dabei ist die Überwachung bzw. Prüfung des Teiltelegramms mit der Synchronisationsinformation mittels des CRC-Feldes wesentlich einfacher im Bezug auf den Rechenaufwand und schneller durchzuführen als die Prüfung des gesamten Master-Datentelegramms MDT unter Verwendung der Prüfsumme FCS. Dies beruht darauf, dass die Datenfelder des Teiltelegramms mit der Synchronisationsinformation, d.h. vom Anfang des Master-Datentelegramms MDT bis zu dem CRC-Feld des Synchronisationsteilfeldes MST, bekannt sind bzw. sich in einer Auswahl von relativ wenigen Möglichkeiten für den Dateneintrag beschränkt. Die Prüfsumme CRC kann daher bereits im Vorhinein bestimmt werden und die Überprüfung des Teiltelegramms kann durch einfachen Vergleich erfolgen. Die Prüfsumme CRC ändert sich auch nicht in Abhängigkeit vom restlichen Telegramminhalt. Im Gegensatz dazu muss zur Überprüfung der Gültigkeit des gesamten Master-Datentelegramms MDT die Prüfsumme FCS des gesamten Telegramms erst aufwendiger ermittelt werden, da diese insbesondere abhängig von dem übertragenen (variablen) Dateninhalt, insbesondere in Bezug auf das Datenfeld, ist.

Die Erfindung wurde vorstehend anhand von bevorzugten Ausführungsformen derselben näher erläutert. Für einen Fachmann ist es jedoch offensichtlich, dass unterschiedliche Abwandlungen und Modifikationen gemacht werden können, ohne von dem der Erfindung zugrundeliegenden Gedanken abzuweichen.

## Patentansprüche

1. Verfahren zur Synchronisation in einem Kommunikationssystem, welches einen Zentralteilnehmer (M) und wenigstens einen weiteren Teilnehmer (S1, S2, S3) aufweist, wobei wenigstens einer der weiteren Teilnehmer (S1, S2, S3) zum Empfangen eines Triggerzeitpunkts auf den Zentralteilnehmer (M) synchronisiert wird, und wobei hierfür ein Datentelegramm mit Synchronisationsinformation vom Zentralteilnehmer (M) zu dem wenigstens einen weiteren Teilnehmer (S1, S2, S3) übertragen wird, **dadurch gekennzeichnet, dass** die in dem Datentelegramm enthaltene Synchronisationsinformation mit einer eigenen Prüfsumme abgesichert ist.

2. Verfahren nach Anspruch 1, **dadurch gekennzeichnet, dass** die zur Absicherung der in dem Datentelegramm enthaltenen Synchronisationsinformation verwendete Prüfsumme eine zyklische Redundanzprüfung (CRC) ist.

3. Verfahren nach Anspruch 1 oder 2, **dadurch gekennzeichnet, dass** die Prüfsumme über den Anfang des Datentelegramms bis einschließlich der Synchronisationsinformation gebildet ist.

4. Verfahren nach einem der Ansprüche 1 bis 3, **dadurch gekennzeichnet, dass** die Auswertung der Prüfsumme bei dem wenigstens einen weiteren Teilnehmer (S1, S2, S3) durch Vergleich von vorgespeicherten Prüfsummen für vorbekannte Datentelegrammeinträge erfolgt.

5. Verfahren nach einem der vorstehenden Ansprüche, **dadurch gekennzeichnet, dass** das Datentelegramm ein Master-Datentelegramm (MDT) ist und Sollwerte für von dem wenigstens einen weiteren Teilnehmer angesteuerte Prozessankopplungen aufweist.

6. Verfahren nach einem der vorstehenden Ansprüche, **dadurch gekennzeichnet, dass** die Synchronisationsinformation in das Datenfeld des Datentelegramms eingebettet ist.

7. Verfahren nach Anspruch.6, **dadurch gekennzeichnet, dass** die Synchronisationsinformation ein Teilfeld (MST) des Datenfeldes bildet.

8. Verfahren nach Anspruch 7, **dadurch gekennzeichnet, dass** das Teilfeld (MST) mit der Synchronisationsinformation der erste Eintrag des Datenfeldes ist.

9. Verfahren nach Anspruch 7 oder 8, **dadurch gekennzeichnet, dass** das Ende des Teilfeldes (MST) mit der Synchronisationsinformation einen vorgegebenen zeitlichen Abstand zum Anfang des Datentelegramms besitzt.

10. Verfahren nach Anspruch 9, **dadurch gekennzeichnet, dass** der vorgegebene zeitliche Abstand 2,24 µs ist.

11. Verfahren nach einem der Ansprüche 9 oder 10, **dadurch gekennzeichnet, dass** der vorgegebene zeitliche Abstand unabhängig von der Gesamtlänge des Datentelegramms ist.

12. Verfahren nach einem der Ansprüche 7 bis 11, **dadurch gekennzeichnet, dass** die Prüfsumme hinter dem Teilfeld (MST) mit der Synchronisationsinformation angeordnet ist.

13. Verfahren nach einem der Ansprüche 7 bis 12, **dadurch gekennzeichnet, dass** die Prüfsumme direkt am Ende des Teilfeldes (MST) mit der Synchronisationsinformation angeordnet ist.

14. Verfahren nach einem der Ansprüche 1 bis 13, **dadurch gekennzeichnet, dass** der Anfang des Datentelegramms einen festen Bezug zum Synchronisationszeitpunkt im dem Zentralteilnehmer (M) besitzt.

15. Verfahren nach einem der Ansprüche 7 bis 14, **dadurch gekennzeichnet, dass** das Datentelegramm folgende Felder aufweist:
- ein Präambelfeld;
- ein Zieladressenfeld;
- eine Quelladressenfeld;
- ein Typenfeld;
- ein Datenfeld; und
- ein Prüfsummenfeld;
wobei das Teilfeld (MST) mit der Synchronisationsinformation am Anfang des Datenfeldes angeordnet ist, und wobei das Prüfsummenfeld des Datentelegramms eine Prüfsumme über das gesamte Datentelegramm aufweist.

16. Verfahren nach einem der Ansprüche 7 bis 15, **dadurch gekennzeichnet, dass** das Teilfeld (MST) mit der Synchronisationsinformation folgende Felder aufweist:
- ein Typenfeld;
- ein Phasenfeld; und
- ein Prüfsummenfeld;
wobei das Prüfsummenfeld des Teilfeldes (MST) eine Prüfsumme über den Anfang des Datentelegramms bis einschließlich dem Phasenfeld aufweist.

17. Verfahren nach einem der Ansprüche 7 bis 18, **dadurch gekennzeichnet, dass** die Synchronisationsinformation auch dann ausgewertet wird, wenn das Prüfsummenfeld des Teilfeldes (MST) gültig ist und das Prüfsummenfeld des Datentelegramms ungültig ist.

18. Verfahren nach einem der Ansprüche 1 bis 17, **dadurch gekennzeichnet, dass** das Datentelegramm ein Antriebstelegramm (AT) ist.

19. Verfahren nach einem der vorhergehenden Ansprüche, **dadurch gekennzeichnet, dass** das Datentelegramm ein Ethernet-Telegramm ist.

20. Kommunikationssystem, welches einen Zentralteilnehmer (M) und wenigstens einen weiteren Teilnehmer (S1, S2, S3) aufweist, wobei wenigstens einer der weiteren Teilnehmer (S1, S2; S3) zum Empfangen eines Triggerzeitpunkts auf den Zentralteilnehmer (M) synchronisiert wird, und wobei hierfür ein Datenelegramm mit Synchronisationsinformation vom Zentralteilnehmer (M) zu dem wenigstens einen weiteren Teilnehmer (S1, S2, S3) übertragen wird, **dadurch gekennzeichnet, dass** die in dem Datentelegramm enthaltene Synchronisationsinformation mit einer eigenen Prüfsumme abgesichert ist.

21. Kommunikationssystem nach Anspruch 20 zur Verwendung mit einem Verfahren nach einem der Ansprüche 1 bis 19.

22. Kommunikationssystem nach Anspruch 20 oder 21, **dadurch gekennzeichnet, dass** das Kommunikationssystem ein verteiltes Kommunikationssystem zur dezentralen Steuerung mit einer Master-Slave-Struktur ist.

23. Kommunikationssystem nach einem der Ansprüche 20 bis 22, **dadurch gekennzeichnet, dass** das Kommunikationssystem in einer Ringstruktur und/oder einer linearen Busstruktur ünd/öder einer Sternstruktur angeordnet ist.

24. Kommunikationssystem nach einem der Ansprüche 20 bis 23, **dadurch gekennzeichnet, dass** das Kommunikationssystem auf Ethernet-Physik basiert.

25. Automätisierungssystem mit einem Kommunikationssystem gemäß einem der Ansprüche 20 bis 24, wobei das Automatisierungssystem eine Steuereinheit sowie wenigstens eine Antriebseinheit oder Ein-/Ausgabeeinheit aufweist, und wobei die Steuereinheit mit dem Zentralteilnehmer und jeweils eine der wenigstens einen Antriebseinheit oder Ein-/Ausgabeeinheit mit einem der wenigstens einen weiteren Teilnehmer verbunden ist.

26. Datenelegramm zur Synchronisation zur Vorgabe eines Triggerzeitpunkts in einem Kommunikationssystem, insbesondere gemäß einem der Ansprüche 20 bis 24, welches einen Zentralteilnehmer (M) und wenigstens einen weiteren Teilnehmer (S1, S2, S3) aufweist, wobei wenigstens einer der weiteren Teilnehmer (S 1, S2, S3) zum Empfangen eines Triggerzeitpunkts auf den Zentralteilnehmer (M) synchronisiert wird, und wobei hierfür Synchronisationsinformation vom Zentralteilnehmer (M) zu dem wenigstens einen weiteren Teilnehmer (S1, S2, S3) übertragen wird, **dadurch gekennzeichnet, dass** die in dem Datentelegramm enthaltene Synchronisationsinformation mit einer eigenen Prüfsumme abgesichert ist.

27. Datentelegramm nach Anspruch 26, wobei der gesamte Telegramminhalt durch eine Prüfsumme (FCS) abgesichert ist, und wobei ein Teil des Telegramminhalts durch eine weitere Prüfsumme (CRC) abgesichert ist, **dadurch gekennzeichnet, dass** der durch die weitere Prüfsumme abgesicherte Teil des Datentelegramms Synchronisationsinformation aufweist, und dass der übrige Teil des Telegramms Betriebsdaten aufweist.

28. Datentelegramm nach Anspruch 27, **dadurch gekennzeichnet, dass** die Prüfsumme zur Absicherung des gesamten Telegramminhalts am Ende des Telegramms angeordnet ist, und dass die weitere Prüfsumme in einem vorderen Bereich des Telegramms angeordnet ist.

29. Datentelegramm nach einem der Ansprüche 27 oder 28, **dadurch gekennzeichnet, dass** die Telegramme Ethernet-Telegramme sind.

## Claims

1. Method for synchronization in a communication system which has a central subscriber (M) and at least one further subscriber (S1, S2, S3), wherein at least one of the further subscribers (S1, S2, S3) is synchronized to the central subscriber (M) for the purpose of receiving a trigger time, and wherein this involves a data telegram with synchronization information being transmitted from the central subscriber (M) to the at least one further subscriber (S1, S2, S3), **characterized in that** the synchronization information contained in the data telegram is protected by means of a dedicated checksum.

2. Method according to Claim 1, **characterized in that** the checksum used for protecting the synchronization information contained in the data telegram is a cyclic redundancy check (CRC).

3. Method according to Claim 1 or 2, **characterized in that** the checksum is formed over the start of the data telegram up to and including the synchronization information.

4. Method according to one of Claims 1 to 3, **characterized in that** the checksum is evaluated by the at least one further subscriber (S1, S2, S3) by comparing previously stored checksums for previously known data telegram entries.

5. Method according to one of the preceding claims, **characterized in that** the data telegram is a master data telegram (MDT) and has setpoint values for process coupling operations actuated by the at least one further subscriber.

6. Method according to one of the preceding claims, **characterized in that** the synchronization information is embedded in the data field of the data telegram.

7. Method according to Claim 6, **characterized in that** synchronization information forms a subfield (MST) of the data field.

8. Method according to Claim 7, **characterized in that** the subfield (MST) with the synchronization information is the first entry in the data field.

9. Method according to Claim 7 or 8, **characterized in that** the end of the subfield (MST) with the synchronization information is at a prescribed interval of time from the start of the data telegram.

10. Method according to Claim 9, **characterized in that** the prescribed interval of time is 2.24 µs.

11. Method according to one of Claims 9 and 10, **characterized in that** the prescribed interval of time is independent of the total length of the data telegram.

12. Method according to one of Claims 7 to 11, **characterized in that** the checksum is arranged after the subfield (MST) with the synchronization information.

13. Method according to one of Claims 7 to 12, **characterized in that** the checksum is arranged directly at the end of the subfield (MST) with the synchronization information.

14. Method according to one of Claims 1 and 13, **characterized in that** the start of the data telegram has a fixed relationship to the synchronization time in the central subscriber (M).

15. Method according to one of Claims 7 to 14, **characterized in that** the data telegram has the following fields:
- a preamble field;
- a destination address field;
- a source address field;
- a type field;
- a data field; and
- a checksum field;
wherein the subfield (MST) with the synchronization information is arranged at the start of the data field, and wherein the checksum field of the data telegram has a checksum over the entire data telegram.

16. Method according to one of Claims 7 to 15, **characterized in that** the subfield (MST) with the synchronization information has the following fields:
- a type field;
- a phase field; and
- a checksum field;
wherein the checksum field of the subfield (MST) has a checksum over the start of the data telegram up to and including the phase field.

17. Method according to one of Claims 7 to 18, **characterized in that** the synchronization information is evaluated even if the checksum field of the subfield (MST) is valid and the checksum field of the data telegram is invalid.

18. Method according to one of Claims 1 to 17, **characterized in that** the data telegram is a drive telegram (AT).

19. Method according to one of the preceding claims, **characterized in that** the data telegram is an Ethernet telegram.

20. Communication system which has a central subscriber (M) and at least one further subscriber (S1, S2, S3), wherein at least one of the further subscribers (S1, S2, S3) is synchronized to the central subscriber (M) for the purpose of receiving a trigger time, and wherein this involves a data telegram with synchronization information being transmitted from the central subscriber (M) to the at least one further subscriber (S1, S2, S3), **characterized in that** the synchronization information contained in the data telegram is protected by means of a dedicated checksum.

21. Communication system according to Claim 20 for use with a method according to one of Claims 1 to 19.

22. Communication system according to Claim 20 or 21, **characterized in that** the communication system is a distributed communication system for local control with a master/slave structure.

23. Communication system according to one of Claims 20 to 22, **characterized in that** the communication system is arranged in a ring structure and/or a linear bus structure and/or a star structure.

24. Communication system according to one of Claims 20 to 23, **characterized in that** the communication system is based on Ethernet physics.

25. Automation system having a communication system according to one of Claims 20 to 24, wherein the automation system has a control unit and also at least one drive unit or input/output unit, and wherein the control unit is connected to the central subscriber and a respective one of the at least one drive unit or input/output unit is connected to one of the at least one further subscribers.

26. Data telegram for synchronization for the purpose of prescribing a trigger time in a communication system, particularly according to one of Claims 20 to 24, which has a central subscriber (M) and at least one further subscriber (S1, S2, S3), wherein at least one of the further subscribers (S1, S2, S3) is synchronized to the central subscriber (M) for the purpose of receiving a trigger time, and wherein this involves synchronization information being transmitted from the central subscriber (M) to the at least one further subscriber (S1, S2, S3), **characterized in that** the synchronization information contained in the data telegram is protected by means of a dedicated checksum.

27. Data telegram according to Claim 26, wherein the entire telegram content is protected by a checksum (FCS), and wherein a portion of the telegram content is protected by a further checksum (CRC), **characterized in that** the portion of the data telegram which is protected by the further checksum has synchronization information, and **in that** the remaining portion of the telegram has operating data.

28. Data telegram according to Claim 27, **characterized in that** the checksum for protecting the entire telegram content is arranged at the end of the telegram, and **in that** the further checksum is arranged in a front region of the telegram.

29. Data telegram according to one of Claims 27 and 28, **characterized in that** the telegrams are Ethernet telegrams.

## Revendications

1. Procédé de synchronisation d'un système de communication comportant un participant central (M) et au moins d'autres participants (S1, S2, S3),
au moins l'un des autres participants (S1, S2, S3) est synchronisé sur le participant central (M) pour recevoir un instant de déclenchement et pour cela un télégramme de données avec des informations de synchronisation est transmis à cet effet par le participant central (M) vers au moins un autre participant (S1, S2, S3),
**caractérisé en ce que**
l'information de synchronisation contenue dans le télégramme de données est protégée par sa propre somme de contrôle.

2. Procédé selon la revendication 1,
**caractérisé en ce que**
la somme de contrôle utilisée pour protéger l'information de synchronisation contenue dans le télégramme de données est un contrôle cyclique de redondance (CRC).

3. Procédé selon la revendication 1 ou 2,
**caractérisé en ce que**
la somme de contrôle est formée par le début du télégramme de données jusque y compris l'information de synchronisation.

4. Procédé selon l'une des revendications 1 à 3,
**caractérisé en ce que**
l'exploitation de la somme de contrôle par au moins un autre participant (S1, S2, S3) se fait par comparaison de sommes de contrôle préenregistrées pour des entrées de télégrammes de données, connues préalablement.

5. Procédé selon l'une des revendications précédentes,
**caractérisé en ce que**
le télégramme de données est un télégramme de données maître (MDT) et comporte des valeurs de consigne pour les branchements de procédé commandés par au moins un autre participant.

6. Procédé selon l'une des revendications précédentes,
**caractérisé en ce que**
l'information de synchronisation est intégrée dans le champ des données du télégramme de données.

7. Procédé selon la revendication 6,
**caractérisé en ce que**
l'information de synchronisation forme un champ partiel (MST) du champ de données.

8. Procédé selon la revendication 7,
**caractérisé en ce que**
le champ partiel (MST) avec l'information de synchronisation est le premier enregistrement du champ de données.

9. Procédé selon les revendications 7 ou 8,
**caractérisé en ce que**
la fin du champ partiel (MST) avec l'information de synchronisation, se trouve à un intervalle de temps prédéfini par rapport au début du télégramme de données.

10. Procédé selon la revendication 9,
**caractérisé en ce que**
l'intervalle de temps prédéfini est égal à 2,24 µs.

11. Procédé selon l'une des revendications 9 ou 10,
**caractérisé en ce que**
l'intervalle de temps prédéfini est indépendant de la longueur totale du télégramme de données.

12. Procédé selon l'une des revendications 7 à 11,
**caractérisé en ce que**
la somme de contrôle se trouve derrière le champ partiel (MST) contenant l'information de synchronisation.

13. Procédé selon l'une des revendications 7 à 12,
**caractérisé en ce que**
la somme de contrôle se trouve directement à la fin du champ partiel (MST) avec l'information de synchronisation.

14. Procédé selon l'une des revendications 1 à 13,
**caractérisé en ce que**
le début du télégramme de données est lié selon une relation fixe à l'instant de synchronisation dans le participant central (M).

15. Procédé selon l'une des revendications 7 à 14,
**caractérisé en ce que**
le télégramme de données comprend les champs suivants :
- un préambule,
- un champ d'adresse de destination,
- un champ d'adresse source,
- un champ type,
- un champ de données, et
- un champ de somme de contrôle,
le champ partiel (MST) avec l'information de synchronisation se trouvant au début du champ de données, et
le champ de somme de contrôle du télégramme de données comporte une somme de contrôle pour l'ensemble du télégramme de données.

16. Procédé selon l'une des revendications 7 à 15,
**caractérisé en ce que**
le champ partiel (MST) avec l'information de synchronisation contient les champs suivants :
- un champ type,
- un champ de phase,
- un champ de somme de contrôle,
le champ de somme de contrôle du champ partiel (MST) ayant une somme de contrôle concernant le début du télégramme de données jusque y compris le champ de phase.

17. Procédé selon l'une des revendications 7 à 18,
**caractérisé en ce que**
l'information de synchronisation sera également exploitée si le champ de somme de contrôle du champ partiel (MST) est valable et le champ de somme de contrôle du télégramme de données est non valable.

18. Procédé selon l'une des revendications 1 à 17,
**caractérisé en ce que**
le télégramme de données est un télégramme pilote (AT).

19. Procédé selon l'une des revendications précédentes,
**caractérisé en ce que**
le télégramme de données est un télégramme Ethernet.

20. Système de communication comportant un participant central (M) et au moins un autre participant (S1, S2, S3), au moins l'un des autres participants (S1, S2, S3) étant synchronisé sur le participant central (M) pour la réception d'un instant de déclenchement, et
un télégramme de données avec une information de synchronisation étant transmise à cet effet par le participant central (M) vers au moins un autre participant (S1, S2, S3),
**caractérisé en ce que**
l'information de synchronisation contenue dans le télégramme de données est protégée par sa propre somme de contrôle.

21. Système de communication selon la revendication 20 destiné à être appliqué à un procédé selon l'une des revendications 1 à 19.

22. Système de communication selon la revendication 20 ou 21,
**caractérisé en ce qu'**
il est un système de communication réparti pour la commande décentralisée ayant une structure maître-esclave.

23. Système de communication selon l'une des revendications 20 à 22,
**caractérisé en ce que**
le système de communication est prévu dans une structure en anneau et/ ou dans une structure de bus linéaire et/ ou une structure en étoile.

24. Système de communication selon l'une des revendications 20 à 23,
**caractérisé en ce qu'**
il est fondé sur la structure Ethernet.

25. Système d'automatisation avec un système de communication selon l'une des revendications 20 à 24, le système d'automatisation ayant une unité de commande ainsi qu'au moins une unité d'entraînement ou une unité entrée/sortie, et
l'unité de commande étant reliée au participant central et chaque fois au moins l'unité d'entraînement ou l'unité entrée/sortie est reliée au moins à un autre participant.

26. Télégramme de données pour la synchronisation servant à prédéfinir un instant de déclenchement dans un système de communication, notamment selon l'une des revendications 20 à 24 comportant un participant central (M) et au moins un autre participant (S1, S2, S3), au moins l'un des autres participants (S1, S2, S3) étant synchronisé sur le participant central (M) pour recevoir un instant de déclenchement, et
l'information de synchronisation étant transmise par le participant central (M) vers au moins un autre participant (S1, S2, S3),
**caractérisé en ce que**
l'information de synchronisation contenue dans le télégramme de données est protégée par sa propre somme de contrôle.

27. Télégramme de données selon la revendication 26 selon lequel l'ensemble du contenu du télégramme est protégé par une somme de contrôle (FCS) et une partie du contenu du télégramme est protégée par une autre somme de contrôle (CRC),
**caractérisé en ce que**
la partie du télégramme de données protégée par l'autre somme de contrôle comporte une information de synchronisation et l'autre partie du télégramme comporte les données de fonctionnement.

28. Télégramme de données selon la revendication 27,
**caractérisé en ce que**
la somme de contrôle pour protéger l'ensemble du contenu du télégramme est prévue à la fin du télégramme et l'autre somme de contrôle se trouve dans la zone avant du télégramme.

29. Télégramme de données selon l'une des revendications 27 ou 28,
**caractérisé en ce que**
les télégrammes sont des télégrammes de type Ethernet.
